# EUROPÄISCHE PATENTSCHRIFT

(11) **EP 1 522 766 B1**
(45) Veröffentlichungstag und Bekanntmachung des Hinweises auf die Patenterteilung: **25.02.2009**
(21) Anmeldenummer: 04022906.4
(22) Anmeldetag: 25.09.2004
(51) Int. Cl.: F16H 19/04

(54) **Triebstockanordnung**
Rack arrangement
Arrangement de crémaillère

(30) Priorität: 09.10.2003 DE 20315520 U
(43) Veröffentlichungstag der Anmeldung: 13.04.2005
(73) Patentinhaber: Berendes, Franz, 45131 Essen (DE)
(72) Erfinder: Berendes, Franz, 45131 Essen (DE)
(74) Vertreter: Nunnenkamp, Jörg

(56) Entgegenhaltungen:
- EP-A- 0 851 150
- DE-A1- 1 625 178
- DE-A1- 2 545 074
- DE-A1- 2 746 636
- DE-A1- 3 228 412
- DE-A1- 19 746 360
- GB-A- 1 180 603
- PATENT ABSTRACTS OF JAPAN Bd. 1997, Nr. 04, 30. April 1997 (1997-04-30) -& JP 08 333910 A (TAKENAKA KOMUTEN CO LTD), 17. Dezember 1996 (1996-12-17)
- PATENT ABSTRACTS OF JAPAN Bd. 1995, Nr. 07, 31. August 1995 (1995-08-31) -& JP 07 091078 A (SHIMIZU CORP), 4. April 1995 (1995-04-04)
- PATENT ABSTRACTS OF JAPAN Bd. 2000, Nr. 25, 12. April 2001 (2001-04-12) -& JP 2001 227612 A (TEIJIN SEIKI CO LTD), 24. August 2001 (2001-08-24)

## Beschreibung

Die Erfindung betrifft eine Triebstockanordnung, insbesondere zum Heben und Senken von Podien, mit wenigstens einer Triebstockstange mit Triebstockzähnen, in welche ein Antriebsrad eingreift, wobei die jeweiligen Triebstockzähne drehbar in oder an der Triebstockstange gelagert sind, und wobei die Paarung Antriebsradzahn - Triebstockzahn eine größere Reibzahl als die Paarung Triebstockzahn - Triebstockstange aufweist.

Bei einer Triebstockanordnung der eingangs beschriebenen Gestaltung entsprechend der EP 0 851 150 A1 sind die dortigen Triebstockzähne drehbar in der Triebstockstange gelagert. Ähnliches gilt für die DE 32 28 412 A1.

Trotz der drehbaren Lagerung der Triebstockzähne können Geräuschemissionen nicht ausgeschlossen werden, die besonders störend sind, wenn die Triebstockanordnung ein Podium oder eine Bühne in einem Theater bzw. Konzertsaal hebt.

Vergleichbares gilt für eine Triebstockanordnung, wie sie in der DE 197 46 360 C2 beschrieben wird. Denn diese Triebstockanordnung ohne drehbar gelagerte Triebstockzähne kommt beim Vorschub von Bergbaugewinnungsmaschinen zum Einsatz.

Die Gesamtangriffsfläche einzelner Triebstockzähne bildet dabei lediglich eine durchgehend ebene Flankenfläche, die im Kopfbereich der Triebstockzähne über konvex bogenförmige Zahnflächen in der ebenen oder gewölbten Kopffläche der Triebstockzähne ausläuft. Diese spezielle Gestaltung der Triebstockzähne soll dafür sorgen, dass ungünstige Zahneingriffsverhältnisse zwischen dem Antriebsrad und dem Triebstock und daraus resultierende Störeinflüsse weitgehend unterdrückt werden.

Bei der bekannten Triebstockanordnung sind die Triebstockzähne jeweils über Schweißnähte mit zugehörigen Tragleisten der Triebstockstange verbunden. Das führt zu nicht unerheblichen Geräuschemissionen beim Antrieb der Triebstockstange, die im Bergbaubereich keine Rolle spielen, bei anderen Anwendungen jedoch störend wirken. Das gilt besonders für den Fall, dass mit einer solchen Triebstockanordnung ein Podium in einem Konzertsaal, einem Opernhaus, einem Theater oder auch einem Veranstaltungssaal zumeist in der Höhe verstellt werden soll. Hier will die Erfindung Abhilfe schaffen.

Der Erfindung liegt das technische Problem zu Grunde, eine Triebstockanordnung der eingangs beschriebenen Gestaltung so weiter zu entwickeln, dass mit dem Antrieb der jeweiligen Triebstockstange verbundene Geräusche auf ein Minimum reduziert sind.

Zur Lösung dieser technischen Problemstellung ist eine gattungsgemäße Triebstockanordnung im Rahmen der Erfindung dadurch gekennzeichnet, dass der jeweilige Triebstockzahn in eine Gleitlagerbuchse eingesetzt ist, die ihrerseits im Zuge einer Presspassung in eine Aufnahme in der Triebstockstange verankert wird.

In Folge der drehbaren Lagerung der Triebstockzähne in oder an der Triebstockstange wird zunächst einmal eine ähnliche Kraftübertragung wie bei einer Rollenkette erreicht. Außerdem stellt die zuvor angegebene Bemessungsregel für die Reibzahlen sicher, dass der jeweilige Antriebsradzahn den drehbar in oder an der Triebstockstange gelagerten Triebstockzahn beim Antrieb in Rotationen versetzt. Dadurch ist der Verschleiß an dieser Stelle minimiert und werden im Übrigen Geräusche kaum erzeugt.

Die Reibung zwischen dem jeweiligen Triebstockzahn und der Triebstockstange ist also geringer als diejenige zwischen dem Antriebsradzahn und dem Triebstockzahn. Dadurch wird bei an dem jeweiligen Triebstockzahn angreifendem Antriebsradzahn der jeweilige Triebstockzahn unmittelbar in Rotationen versetzt, so dass sich der Antriebsradzahn am sich drehenden Triebstockzahn unter minimaler Geräuschentwicklung abwälzen kann.

Das erreicht die Erfindung im Detail dadurch, dass der jeweilige Triebstockzahn in eine Gleitlagerbuchse eingesetzt ist, die ihrerseits im Zuge einer Presspassung in einer Aufnahme in der Triebstockstange verankert wird. Bei dieser Gleitlagerbuchse mag es sich um eine Kohlefaserverbundbuchse handeln, die ohne Schmierstoffe auskommt und leicht und standfest ausgebildet ist. Zwischen dem üblicherweise aus Stahl gefertigten Triebstockzahn und der Gleitlagerbuchse aus regelmäßig Kohlefaserverbundwerkstoff stellt sich eine Reibzahl von weniger als 0,1, beispielsweise 0,09, ein. Dagegen beträgt die Reibzahl zwischen dem ebenfalls aus Stahl gefertigten jeweiligen Antriebsradzahn und dem Triebstockzahn in etwa 0,1 oder geringfügig mehr (Stahl auf Stahl).

Die beschriebenen Materialpaarungen Stahl/Stahl und Stahl/Kohlefaserverbundwerkstoff sorgen also im Rahmen der Erfindung automatisch dafür, dass sich die Reibungsverhältnisse wie gewünscht einstellen und insbesondere beim Antrieb der jeweiligen Triebstockstange die in oder an der Triebstockstange drehbar gelagerten Triebstockzähne rotieren.

Die Triebstockstange kann im Querschnitt im Wesentlichen U-förmig mit U-Basis und U-Schenkeln ausgebildet sein. Dabei mag das Antriebsrad zwischen die beiden U-Schenkel eingreifen bzw. eintauchen, die ihrerseits gleichsam einen Schlitz zur Verfügung stellen. Die Triebstockzähne sind in diesem Fall zwischen den beiden U-Schenkeln angeordnet, und erstrecken sich jeweils in Längsrichtung der Triebstockstange.

Um die Triebstockstange einwandfrei und mit möglichst geringem Spiel zu führen, sind darüber hinaus Führungsrollen und mit diesen zusammenwirkende Führungsflächen an Führungsstegen an der jeweiligen Triebstockstange vorgesehen. Das erreicht die Erfindung im Detail dadurch, dass die Triebstockstange in einer Führungseinhausung mit darin angeordnetem Antriebsrad aufgenommen wird. Diese Führungseinhausung trägt also die bereits angesprochenen Führungsrollen und nimmt im Übrigen das Antriebsrad auf. Dadurch lassen sich Verletzungen ausschließen, weil das Antriebsrad geschützt in der Führungseinhausung befindlich ist.

Für die Führung der jeweiligen Triebstockstange sorgen nun jeweils paarweise übereinander angeordnete Führungsrollen. Dabei hat es sich bewährt, diese paarweise übereinander angeordneten Führungsrollen an jeder Außenseite der Triebstockstange vorzusehen. Weil die Triebstockstange im Querschnitt angenähert rechteckförmig bzw. U-förmig ausgebildet ist, bieten sich an jeder der vier Außenseiten zumeist jeweils zwei Führungsflächen an, die mit entsprechend gestalteten Führungsflächen an den Führungsrollen zusammenwirken.

Es versteht sich, dass die jeweiligen Führungsflächen entsprechend bearbeitet sind, um eine möglichst spielfreie Führung der Triebstockstange zwischen den Führungsrollen zu gewährleisten. Zu diesem Zweck werden die jeweiligen Führungsflächen an der Triebstockstange nach deren (schweißender) Herstellung aus einzelnen Tragleisten speziell bearbeitet. Gleiches gilt für die Führungsflächen auf den Führungsrollen. Auf diese Weise wird die jeweilige Triebstockstange einwandfrei in einer Ebene, beispielsweise der X-, Y-Ebene geführt und werden lediglich Bewegungen der Triebstockstange demgegenüber in zumeist Z-Richtung bzw. Höhenrichtung zugelassen.

Um ein von mehreren Triebstockstangen gehaltenes Podium einwandfrei ausrichten und heben sowie senken zu können, sind das Antriebsrad bzw. ein zugehöriger elektromotorischer Antrieb, wenigstens eine Wägezelle sowie gegebenenfalls zumindest ein Wegsensor an eine gemeinsame Steueranlage angeschlossen. Mit Hilfe der Wägezelle kann die von dem jeweiligen Triebstock bewegte Last ständig kontrolliert und mit in der Steueranlage abgelegten Sollwerten verglichen werden. Gleiches gilt für den Wegsensor, welcher den betreffenden Verstellweg dokumentiert und mit abgelegten Sollwerten vergleicht. Schließlich mag noch ein ebenfalls von der Steueranlage überwachter Sperrriegel vorgesehen werden, welcher zwischen einzelne Triebstockzähne im Falle einer Reparatur an der Triebstockanordnung eingreift. Der eingefahrene Sperrriegel liefert ein entsprechendes Signal an die Steueranlage, so dass der motorische Antrieb für das Antriebsrad außer Kraft gesetzt ist. Ansonsten wird die jeweilige Triebstockstange durch eine Bremseinrichtung in der gewünschten Position gehalten. Bei dieser Bremseinrichtung mag es sich um eine Bremsscheibenanordnung handeln, was jedoch nicht zwingend ist.

Schließlich verfügt jede Triebstockstange kopfseitig über eine Nivelliereinrichtung. Diese mag für eine exakt horizontale Anordnung des aufliegenden Podiums und auch dessen Schrägstellung sorgen. Gleichzeitig weist die Nivelliereinrichtung Dämpfungsmittel auf, um die Übertragung von Körperschall von der jeweiligen Triebstockstange auf das Podium zu unterbinden. Dadurch wird eine akustische Entkopplung erreicht.

Im Ergebnis wird eine Triebstockanordnung zur Verfügung gestellt, die durch ein minimiertes Geräuschverhalten bei der Verstellung überzeugt. Als ausschlaggebend hat sich hierbei herausgestellt, dass sich die Triebstockzähne beim Eingriff des Antriebsrades und folglich der Verstellung der Triebstockstange an den jeweiligen Zahnflanken drehend abwälzen. Das wird durch deren drehbare Lagerung in Verbindung mit den vorgegebenen Reibungsverhältnissen erreicht. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Triebstockanordnung,
- Fig. 2: eine Seitenansicht der Triebstockanordnung
- Fig. 3: einen Detailausschnitt aus Fig. 2 im Bereich der Führungseinhausung und
- Fig. 4: einen Querschnitt durch die jeweilige Triebstockstange im Bereich der Führungseinhausung.

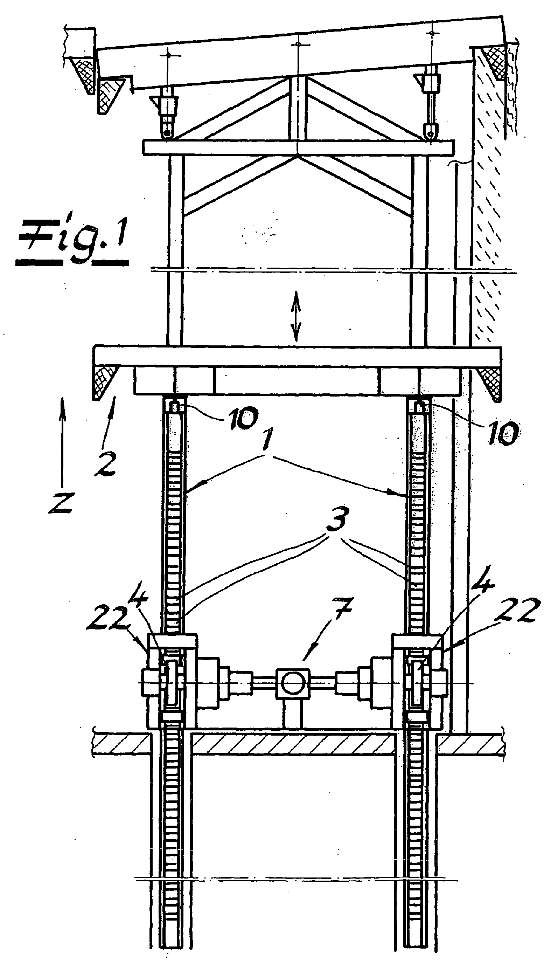

In den Figuren ist eine Triebstockanordnung dargestellt, die sich aus insgesamt vier Triebstockstangen 1 zusammensetzt, die zum Heben und Senken einer Podiumskonstruktion Verwendung finden. Im Rahmen der Darstellung nach Fig. 1 setzt sich die Podiumskonstruktion aus zwei Podien 2 zusammen, wobei die nachfolgend im Detail noch näher erläuterte Triebstockanordnung an das untere Podium 2 angeschlossen ist. Das Podium 2 bzw. die Podiumkonstruktion im Ganzen mag Bestandteil eines Bühnenbodens in einem Theater, einem Opernhaus, einem Veranstaltungssaal etc. sein. Das ist jedoch nicht zwingend.

Mit Hilfe der Triebstockanordnung lässt sich nun das betreffende Podium 2 in Z-Richtung, d. h. zumeist vertikal, Heben und Senken. Zu diesem Zweck verfügt die jeweilige Triebstockstange 1 über Triebstockzähne 3 bzw. speziell gestaltete Triebstockbolzen, in welche ein Antriebsrad 4 eingreift. Das Antriebsrad 4 besitzt Antriebsradzähne 10 mit konvexen Zahnflanken 6.

Dadurch kann die vom jeweiligen Antriebsrad 4 auf den Triebstock 1 übertragene Aufwärtsbewegung gleichmäßig in das zugehörige Podium 2 eingeleitet werden. Ein stoßartiger Betrieb bzw. eine stoßartige Aufwärtsbewegung findet nicht statt.

Das jeweilige Antriebsrad 4 wird von einem oder mehreren lediglich angedeuteten elektromotorischen Antrieben 7 unter Zwischenschaltung eines nicht dargestellten Getriebes, insbesondere Schneckenradgetriebes, zu Drehungen veranlasst. Indem die Antriebsradzähne 5 zwischen die in Längserstreckung der Triebstockstange 1 angeordneten Triebstockzähne 3 eingreifen, lässt sich die jeweilige Triebstockstange 1 heben und senken, wie dies durch einen Doppelpfeil in Fig. 1 angedeutet ist. Die Position der Triebstockstange 1 wird mit einer nicht dargestellten Scheibenbremsvorrichtung fixiert. Gleichzeitig meldet ein Wegsensor 8 an eine Steueranlage 9 den hierbei überstrichenen Verstellweg. Darüber hinaus erhält die Steueranlage 9 Signale von einer Wägezelle 10, welche sich kopfseitig der Triebstockstange 1 befindet und die jeweils von der Triebstockanordnung bewegte Last registriert.

Die Podiumkonstruktion bzw. das Podium 2 liegt kopfseitig auf der Wägezelle 10 auf, die ihrerseits kopfseitig der zugehörigen Triebstockstange 1 angeordnet ist. Zu diesem Zweck greift ein Zapfen 11 der Wägezelle 10 in eine Aufnahmebuchse 12 an der Podiumkonstruktion bzw. am unteren Podium 2 ein. Damit das betreffende Podium 2 sowohl Hebe- als auch Senkbewegungen folgen kann und folglich nicht "hängen" bleibt, während die jeweilige Triebstockstange 1 abwärts fährt, sind Mitnehmer 13 am Podium 2 vorgesehen, welche von Auslegern 14 kopfseitig der Triebstockstange bzw. des Triebstockes 1 hintergriffen werden.

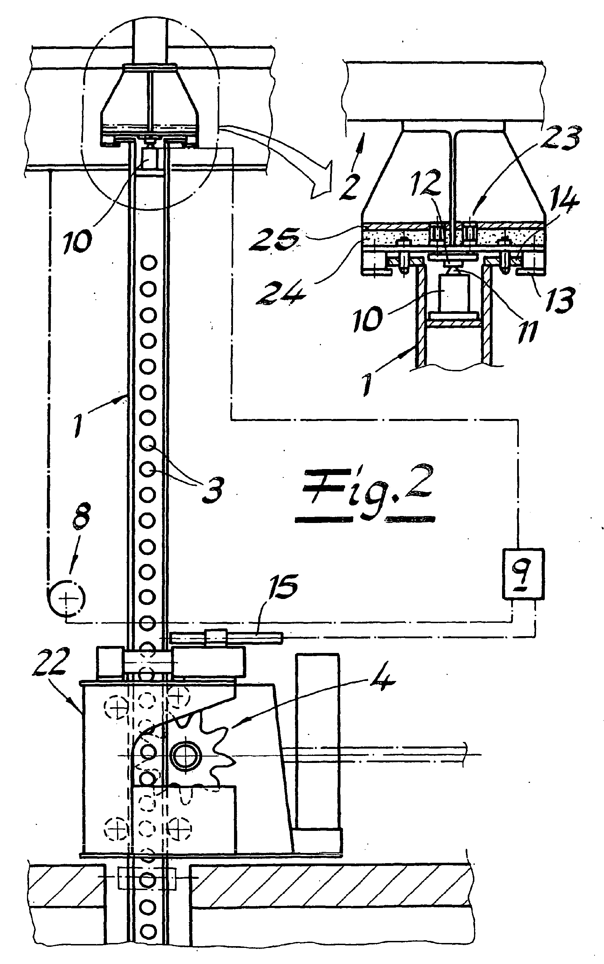

Die Steueranlage 9 erhält schließlich noch Signale von einem Sperrriegel 15, den man am besten in der Fig. 2 erkennen kann. Für Wartungsarbeiten greift der Sperrriegel 15 zwischen einzelne Triebstockzähne 3 ein. Die Steueranlage 9 folgert hieraus, dass der elektromotorische Antrieb 7 nicht betätigt werden darf.

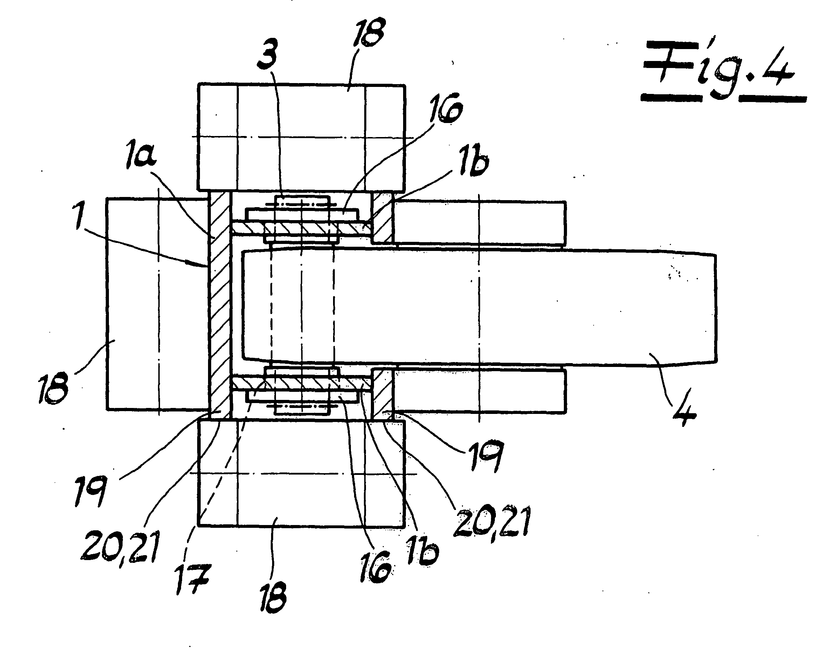

Um beim Heben und Senken der jeweiligen Triebstockstange 1 Geräuschemissionen zu minimieren, sind erfindungsgemäß die jeweiligen Triebstockzähne 3 drehbar in oder an der Triebstockstange 1 gelagert. Im Rahmen des Ausführungsbeispiels verfügt die Triebstockstange 1 im Querschnitt über eine im Wesentlichen U-förmige Gestalt mit U-Basis 1a und U-Schenkeln 1b. Das wird insbesondere anhand der Fig. 4 deutlich. Zwischen die beiden U-Schenkel 1 b greift das Antriebsrad 4 ein. Außerdem dienen die beiden U-Schenkel 1 b zur drehbaren Lagerung der jeweiligen Triebstockzähne 3. Dazu sind jeweils Gleitlagerbuchsen 16 in den U-Schenkeln 1b realisiert, welche in ihrem Innern den jeweiligen Triebstockzahn 3 aufnehmen. Sowohl die U-Schenkel 1b als auch die U-Basis 1a sind aus jeweiligen Tragleisten gefertigt, die zu dem U-Profil miteinander verschweißt sind.

Die Gleitlagerbuchse 16 wird in eine zugehörige Aufnahme 17 in der Triebstockstange 1 respektive den jeweiligen U-Schenkel 1b eingesetzt und durch eine Presspassung hierin verankert. Als Material für die Gleitlagerbuchse 16 empfiehlt die Erfindung Kohlefaserverbundwerkstoff, so dass sich in Verbindung mit dem jeweils aus Stahl gefertigten Triebstockzahn 3 eine Reibzahl (Stahl/Kohlefaserverbundwerkstoff) von unter 0,1, in der Regel 0,09, einstellt. Dagegen kommt es beim Eingriff des Antriebsrades 4 mit seinen konvexen Zahnflanken 6 der Antriebsradzähne 5 aus Stahl zu einer Reibzahl (Stahl auf Stahl) von ca. 0,1. Die Reibung zwischen dem Triebstockzahn 3 und der Gleitlagerbuchse 16 bzw. der Triebstockstange 1 ist also geringer als diejenige zwischen dem Antriebsrad 4 bzw. den Zahnflanken 6 und dem jeweiligen Triebstockzahn 3. Auf diese Weise gewährleistet die Erfindung, dass sich die Triebstockzähne 3 beim Eingriff des Antriebsrades 4 an den jeweiligen Zahnflanken 6 drehend abwälzen.

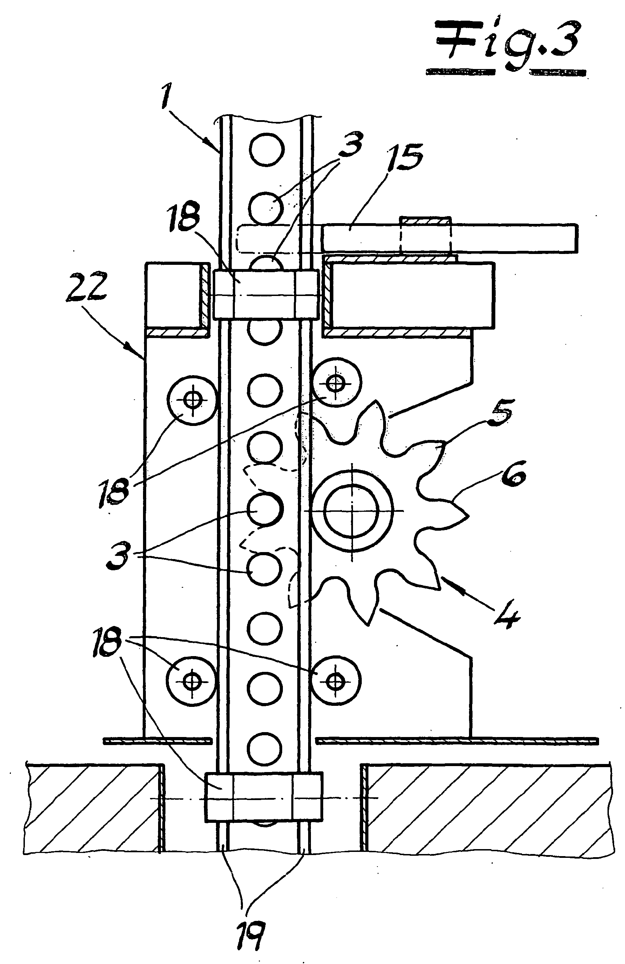

Anhand der Fig. 4 erkennt man, dass die jeweilige Triebstockstange 1 mit Führungsrollen 18 zusammenwirkt. Tatsächlich sind ausweislich der Fig. 3 jeweils paarweise übereinander angeordnete Führungsrollen 18 vorgesehen, und zwar jeweils ein Paar an Führungsrollen 18 jeder der vier Außenseiten der Triebstockstange 1 zugeordnet. Zu diesem Zweck verfügt die Triebstockstange 1 im Detail über mit den Führungsrollen 18 zusammenwirkende Führungsflächen 20 an Führungsstegen 19. Weil die Triebstockstange 1 als Schweißteil aus jeweils Stahlprofilen bzw. den Tragleisten hergestellt ist, stellen sich die Führungsstege 19 als über die U-Basis 1 a respektive die U-Schenkel 1b vorkragende Stege 19 dar.

Die Führungsstege 19 verfügen über jeweils die Führungsflächen 20, die mit korrespondierenden Führungsflächen 21 an den Führungsrollen 18 zusammenwirken. Es versteht sich, dass die jeweiligen Führungsflächen 20, 21 entsprechend bearbeitet sind, um eine möglichst spielfreie Führung der Triebstockstange 1 in größtenteils Z-Richtung zu gewährleisten. Zu diesem Zweck werden die Führungsrollen 18 geschützt in einer Führungseinhausung 22 aufgenommen, welche darüber hinaus das Antriebsrad 4 in seinem Innern aufweist. Zur axialen Festlegung der jeweiligen Triebstockzähne 3 dienen schließlich noch Sprengringe oder vergleichbare Lagerungsmaßnahmen, die man am besten anhand der Fig. 4 erkennt.

Eine Nivelliereinrichtung 23 jeweils kopfseitig der Triebstockstange 1 stellt sicher, dass das Podium 2 in der gewünschten Horizontallage bzw. auch in Schrägstellung ausgerichtet ist. Zusätzliche Dämpfungsmittel sorgen dabei für eine akustische Entkopplung der Triebstockstange 1 vom Podium 2 bzw. der Podiumskonstruktion. Hierbei handelt es sich im Detail um eine Dämmplatte 24, die kopfseitig mit einer Abdeckplatte 25 versehen ist. Das ist jedoch nicht zwingend.

## Patentansprüche

1. Triebstockanordnung, insbesondere zum Heben und Senken von Podien (2), mit wenigstens einer Triebstockstange (1) mit Triebstockzähnen (3), in welche ein Antriebsrad (4) eingreift, wobei
- die jeweiligen Triebstockzähne (3) drehbar in oder an der Triebstockstange (1) gelagert sind, und wobei
- die Paarung Antriebsradzahn (5) - Triebstockzahn (3) eine größere Reibzahl als die Paarung Triebstockzahn (3) - Triebstockstange (1) aufweist,
**dadurch gekennzeichnet, dass**
der jeweilige Triebstockzahn (3) in eine Gleitlagerbuchse (16) eingesetzt ist, die ihrerseits im Zuge einer Presspassung in einer Aufnahme (17) in der Triebstockstange (1) verankert wird.

2. Triebstockanordnung nach Anspruch 1, **dadurch gekennzeichnet, dass** die Gleitlagerbuchse (16) als Kohlefaserverbundbuchse (16) ausgebildet ist.

3. Triebstockanordnung nach Anspruch 1 oder 2, **dadurch gekennzeichnet, dass** die Triebstockstange (1) im Querschnitt im Wesentlichen U-förmig mit U-Basis (1a) und U-Schenkeln (1b) ausgebildet ist.

4. Triebstockanordnung nach einem der Ansprüche 1 bis 3, **dadurch gekennzeichnet, dass** die Triebstockzähne (3) zwischen den beiden U-Schenkeln (1b) in Längserstreckung der Triebstockstange (1) angeordnet sind.

5. Triebstockanordnung nach einem der Ansprüche 1 bis 4, **dadurch gekennzeichnet, dass** die Triebstockstange (1) mit Führungsrollen (18) zusammenwirkende Führungsflächen (20) aufweist.

6. Triebstockanordnung nach einem der Ansprüche 1 bis 5, **dadurch gekennzeichnet, dass** die Triebstockstange (1) in einer Führungseinhausung (22) mit darin angeordnetem Antriebsrad (4) geführt wird.

7. Triebstockanordnung nach einem der Ansprüche 1 bis 6, **dadurch gekennzeichnet, dass** jeweils paarweise übereinander angeordnete Führungsrollen (18) an jeder Außenseite der Triebstockstange (1) vorgesehen sind.

8. Triebstockanordnung nach einem der Ansprüche 1 bis 7, **dadurch gekennzeichnet, dass** das Antriebsrad (4), wenigstens eine Wägezelle (10) sowie gegebenenfalls zumindest ein Wegsensor (8) an eine gemeinsame Steueranlage (9) angeschlossen sind.

9. Triebstockanordnung nach einem der Ansprüche 1 bis 8, **dadurch gekennzeichnet, dass** die Triebstockstange (1) kopfseitig eine Nivelliereinrichtung (23) zur Ausrichtung des aufgelegten Podiums (2) sowie dessen akustischer Entkopplung aufweist.

## Claims

1. Rack and pinion arrangement, in particular for raising and lowering podiums (2), with at least one rack (1) with rack teeth (3) in which a driving gear (4) engages, wherein
- the respective rack teeth (3) are mounted rotatably in or on the rack (1), and wherein
- the pairing of driving gear tooth (5) - rack tooth (3) has a greater coefficient of friction than the pairing of rack tooth (3) - rack (1),
**characterised in that**
the respective rack tooth (3) is inserted into a sliding bushing (16), which is for its part anchored in a receptacle (17) in the rack (1) in the course of a press fit.

2. Rack and pinion arrangement according to Claim 1, **characterised in that** the sliding bushing (16) is configured as a carbon fibre composite bushing (16).

3. Rack and pinion arrangement according to Claim 1 or 2, **characterised in that** the rack (1) is configured to be essentially U-shaped in cross section with a U base (1a) and U limbs (1b).

4. Rack and pinion arrangement according to one of Claims 1 to 3, **characterised in that** the rack teeth (3) are arranged between the two U limbs (1 b) in the longitudinal direction of the rack (1).

5. Rack and pinion arrangement according to one of Claims 1 to 4, **characterised in that** the rack (1) has guide faces (20) which interact with guide rollers (18).

6. Rack and pinion arrangement according to one of Claims 1 to 5, **characterised in that** the rack (1) is guided in a guide housing (22) with the driving gear (4) arranged therein.

7. Rack and pinion arrangement according to one of Claims 1 to 6, **characterised in that** guide rollers (18), which are in each case arranged in pairs one above the other, are provided on each outer side of the rack (1).

8. Rack and pinion arrangement according to one of Claims 1 to 7, **characterised in that** the driving gear (4), at least one weighing cell (10) and where necessary at least one travel sensor (8) are connected to a common control system (9).

9. Rack and pinion arrangement according to one of Claims 1 to 8, **characterised in that** the rack (1) has at the head end a levelling device (23) for aligning the podium (2) which is placed on top and for the acoustic decoupling of the said podium.

## Revendications

1. Dispositif de crémaillère, notamment pour élever et abaisser des podiums (2), comportant au moins une tige de crémaillère (1) avec des dents de crémaillère (3), avec lesquelles une roue d'entraînement (4) vient en prise, dans lequel
- les dents de crémaillère (3) respectives sont positionnées rotative ment dans ou sur la tige de crémaillère (1), et dans lequel
- la paire dent de roue d'entraînement (5) - dent de crémaillère (3) présente un plus grand coefficient de friction que la paire dent de crémaillère (3) - tige de crémaillère (1),
**caractérisé en ce que**
- la dent de crémaillère (3) respective est enfoncée dans un coussinet de palier lisse (16), qui est de son côté ancré au cours d'un ajustement par pressage dans un réceptacle (17) dans la tige de crémaillère (1).

2. Dispositif de crémaillère selon la revendication 1, **caractérisé en ce que** le coussinet de palier lisse (16) est configuré comme un coussinet composite en fibres de carbone (16).

3. Dispositif de crémaillère selon la revendication 1 ou 2, **caractérisé en ce que** la tige de crémaillère (1) est configurée essentiellement en forme de U en section transversale avec une base de U (1a) et des pans de U (1b).

4. Dispositif de crémaillère selon une des revendications 1 à 3, **caractérisé en ce que** les dents de crémaillère (3) sont disposées entre les deux pans de U (1 b) dans l'extension longitudinale de la tige de crémaillère (1).

5. Dispositif de crémaillère selon une des revendications 1 à 4, **caractérisé en ce que** la tige de crémaillère (1) présente des surfaces de guidage (20) coopérant avec des rouleaux de guidage (18).

6. Dispositif de crémaillère selon une des revendications 1 à 5, **caractérisé en ce que** la tige de crémaillère (1) est guidée dans un coffrage de guidage (22) dans lequel est disposée une roue d'entraînement (4).

7. Dispositif de crémaillère selon une des revendications 1 à 6, **caractérisé en ce que** des rouleaux de guidage (18) disposés respectivement par paires superposées sont prévus sur chaque côté externe de la tige de crémaillère (1).

8. Dispositif de crémaillère selon une des revendications 1 à 7, **caractérisé en ce que** la roue d'entraînement (4), au moins une cellule de pesée (10) ainsi que le cas échéant au moins un capteur de déplacement (8) sont raccordés à une installation de commande (9) commune.

9. Dispositif de crémaillère selon une des revendications 1 à 8, **caractérisé en ce que** la tige de crémaillère (1) présente du côté de la tête un dispositif de nivellement (23) en vue de l'alignement du podium (2) dressé ainsi que du découplage acoustique de celui-ci.
